# EUROPEAN PATENT SPECIFICATION

(11) **EP 1 566 917 B1**
(45) Date of publication and mention of the grant of the patent: **31.10.2012**
(21) Application number: 05250410.7
(22) Date of filing: 27.01.2005
(51) Int. Cl.: H04B 7/04, H04L 1/06

(54) **Adaptive MIMO systems**
Adaptive MIMO-Systeme
Systèmes adaptives à multiples entrées et sorties (MIMO)

(30) Priority: 23.02.2004 GB 0403975
(43) Date of publication of application: 24.08.2005
(73) Proprietor: Kabushiki Kaisha Toshiba, Tokyo 105-8001 (JP)
(72) Inventor: Skraparlis, Dimitrios c/o Toshiba Research Europe, Bristol BS1 4ND (GB)
(74) Representative: Round, Edward Mark

(56) References cited:
- WO-A-02/082689
- WO-A-03/005606
- WO-A-03/073646
- US-A- 5 949 484
- US-A1- 2001 031 647
- US-A1- 2002 114 269
- US-A1- 2002 154 705
- ABE T ET AL: "A hybrid MIMO system using spatial correlation" WIRELESS PERSONAL MULTIMEDIA COMMUNICATIONS, 2002. THE 5TH INTERNATIONAL SYMPOSIUM ON OCT. 27-30, 2002, PISCATAWAY, NJ, USA,IEEE, vol. 3, 27 October 2002 (2002-10-27), pages 1346-1350, XP010619313 ISBN: 0-7803-7442-8

## Description

This invention is generally concerned with apparatus, methods and processor control code for MIMO (multiple-input multiple-output) communications systems.

An underlying idea in MIMO systems is space-time signal processing, which effectively takes advantage of the separatability of the spatial channels between the multiple transmit and multiple receive antennas or the MIMO channels to provide higher data rates without a concomitant increase in spectral usage or, alternatively, increased robustness and a lower error rate. Broadly speaking coding a signal in space or/and time (spatial, time and space-time diversity) increases robustness by effectively providing numerous versions of a signal whilst multiplexing in space (spatial multiplexing) effectively increases the available data rate. In a fixed configuration MIMO system a choice must be made as to this trade-off between spatial-multiplexing and space-time-diversity although one of the major advantages of MIMO systems is generally seen as their ability to provide an increased data rate transmission.

The current generation of WLAN (wireless local area network) standards such as Hiperlan/2 (in Europe) and IEEE802.11a (in the USA) provide data rates of up to 54 Mbit/s. Increased data rates, for example for multimedia services, may be achieved by simply increasing the data transmission bandwidth, but this is inefficient and expensive. MIMO systems have the capability to increase throughput without increasing bandwidth, the throughput potentially scaling linearly with the number of transmit/receive antennas (see, for example, Telatar I.E., Capacity of multi-antenna Gaussian channels. Bell Labs Technical Memorandum, 1995, also in European Transactions on Telecommunications, vol .10, p.5 85-595, Nov/Dec 1999; Foschini G. J. and Gans M. J., On limits of wireless communications in a fading environment when using multiple antennas, Wireless Personal Communications, vol. 6, p. 311-335, 1998).

For example a four transmit, four receive antenna system provides up to four times the capacity of a single transmit-receive antenna system.

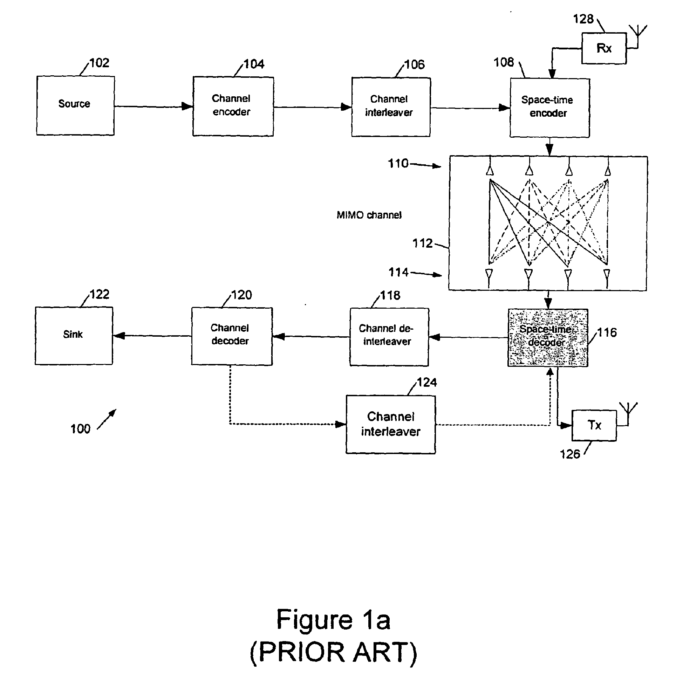

Figure 1a shows a typical MIMO data communications system 100. A data source 102 provides data (comprising information bits or symbols) to a channel encoder 104. The channel encoder typically comprises a convolutional coder such as a recursive systematic convolutional (RSC) encoder, or a stronger so-called turbo encoder (which includes an interleaver). More bits are output than are input, and typically the rate is one half or one third. The channel encoder 104 is followed by a channel interleaver 106 and, in the illustrated example, a space-time encoder 108. The space-time encoder 108 encodes an incoming symbol or symbols as a plurality of code symbols, which are mapped to complex modulation symbols such as QPSK (quadrature phase shift keying), M-QAM (M-ary quadrature amplitude modulation) for simultaneous transmission from each of a plurality of transmit antennas 110.

Space-time encoding may be described in terms of an encoding machine, described by a coding matrix, which operates on the data to provide spatial and temporal transmit diversity or multiplexing; this is typically followed by a modulator to provide coded symbols for transmission. Space-frequency encoding may additionally (or alternatively) be employed. Thus, broadly speaking, incoming symbols and processed versions (such as symbols which are phase-shifted and scaled according to the Space-Time code algorithm) are distributed into a grid having space and time and/or frequency coordinates, for increased diversity. Where space-frequency coding is employed the separate frequency channels may be modulated onto OFDM (orthogonal frequency division multiplexed) carriers, a cyclic prefix generally being added to each transmitted symbol to mitigate the effects of channel dispersion.

The encoded transmitted signals propagate through MIMO channel 112 to receive antennas 114, which provide a plurality of inputs to a space-time (and/or frequency) decoder 116. This has the task of removing the effect of the encoder 108. The output of the decoder 116 comprises a plurality of signal streams, one for each transmit antenna, each carrying so-called soft or likelihood data on the probability of a transmitted symbol having a particular value. This data is provided to a channel de-interleaver 118 which reverses the effect of channel interleaver 106, and then to a channel decoder 120, such as a Viterbi decoder, which decodes the convolutional code. Typically channel decoder 120 is a SISO (soft-in soft-out) decoder, that is receiving symbol (or bit) likelihood data and providing similar likelihood data as an output rather than, say, data on which a hard decision has been made. The output of channel decoder 120 is provided to a data sink 122, for further processing of the data in any desired manner.

In some communications systems so-called turbo or iterative decoding is employed in which a soft output from channel decoder 120 is provided to a channel interleaver 124, corresponding to channel interleaver 106, which in turn provides soft (likelihood) data to decoder 116 for iterative space-time (and/or frequency) and channel decoding. (It will be appreciated that in such an arrangement channel decoder 120 provides complete transmitted symbols to decoder 116, that is for example including error check bits.)

MIMO systems may encounter different types of channels. The capacity of a MIMO system is not only dependent on SNR but also dependent on the type of channel. Two types of channel are Line-Of-Sight (LOS) and multipath-rich channels (see Da-Shan Shiu; Foschini, G.J.; Gans, M.J.; Kahn, J.M., Fading correlation and its effect on the capacity of multielement antenna systems, Communications, IEEE Transactions on, Vol.48, Iss.3, Mar 2000, Pages:502-513). The performance of different MIMO algorithms is dependent upon the types of MIMO channels, for example, space-time diversity techniques deliver higher data rates with LOS channels, while multiplexing techniques perform better with multipath-rich channels (see Parker, S., Sandell, M., Lee, M., The performance of space-time codes in office environments, Vehicular Technology Conference, 2003. VTC 2003-Spring. The 57th IEEE Semiannual, Volume: 1 , 22-25 April 2003, Pages:741 - 745).

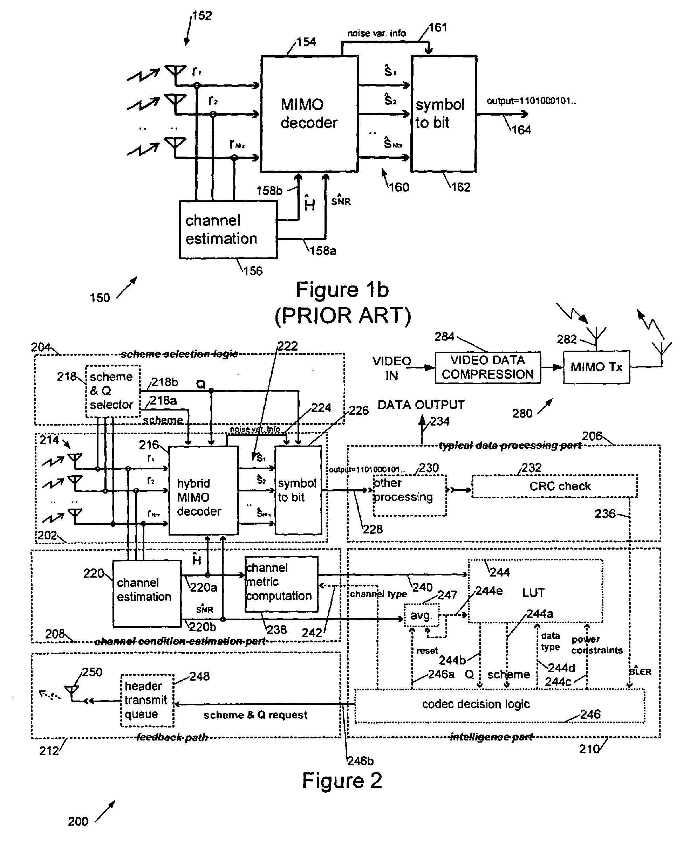

Generally speaking published MIMO communications systems employ a single, fixed MIMO algorithm but in an attempt to circumvent the need to define a particular trade-off of data rate against quality of service some adaptive schemes have been proposed, in particular as described in WO 03/073646, EP 1185001, and Abe T., Fujii H, Tomisato S., A hybrid MIMO System Using Spatial Correlation, Wireless Personal Multimedia Communications, The 5th International Symposium on, 2002. WO '646 describes a multiple-antenna processing scheme in which transmit power is allocated to antennas according to one of a selection of techniques including a water-filling transmission scheme, a selective channel inversion transmission scheme, a uniform transmission scheme, a principal eigenmode beam-forming transmission scheme and a beam-steering transmission scheme. EP '001 describes a MIMO OFDM system in which, broadly speaking, the arrangement of data on OFDM sub carriers uses either time diversity or spatial diversity based upon one of three criteria relating to the channel condition with the aim of maintaining a defined minimum threshold quality of service (QoS), in '001 defined as the number of times that the same packet can be re-transmitted. One of the criteria upon which the choice is made is the condition of the channel matrix H, namely the ratio of the largest and smallest eigenvalues of the MIMO channel matrix H. This document also discloses the selection of a modulation scheme for each sub carrier based upon the estimated carrier-to-inference or signal-to-noise ratio. The Abe et al. paper describes a hybrid MIMO system which selectively employs either spatial multiplexing or transmit diversity (selection diversity in which the whole transmit power is provided to the antenna which provides the largest received SNR and in which spatial correlation between data streams of the MIMO channel matrix is used as a metric. A feedback channel from the receiver to the transmitter allows transmission mode commands defining the transmission scheme and symbol constellation size to be provided from the receiver to the transmitter; a similar arrangement may be implemented in the generalised system of Figure 1 by means of a transmitter 126 and a receiver 128, which need only have a low bandwidth.

There are a number of drawbacks with the above-described adaptive MIMO systems, which do not take full advantage of the possibilities offered by the return channel. In particular these known systems are all relatively simple and leave room for improvements in throughput and/or quality of service. For example there is an inherent assumption in EP '001 that operating in a certain SNR region guarantees a particular quality of service, but in practice this has been found not to be the case. It has been found that a prediction of, for example, a modulation scheme based upon signal-to-noise ratio may not provide optimum results and may benefit from modification in the light of an actual, measured performance.

In relation to another aspect of adaptive MIMO systems it has been recognised that when considering a practical implementation of a MIMO communications system in, for example, a portable battery-powered device, different MIMO communications schemes require significantly different amounts of power when decoding received signals at the receiver, because of the very different complexities and hence processing power requirements of different MIMO decoding algorithms.

According to a first aspect of the present invention there is therefore provided an adaptive MIMO communications system comprising a MIMO transmitter and a MIMO receiver and having a feedback path from said receiver to said transmitter, said MIMO transmitter including a receiver to receive a feedback signal from said receiver sent via said feedback path and a controller responsive to said feedback signal to configure a MIMO transmission from said transmitter to said receiver, said MIMO receiver being configured to receive said MIMO transmission; and wherein said MIMO receiver includes a decision module, said decision module having a power indicating input to input a signal indicating a desired receiver power consumption, and an output for sending a MIMO configuration signal to said MIMO transmitter, said decision module being configured to determine a MIMO transmission configuration responsive to said power indicating input and to output a MIMO configuration signal for feedback to said transmitter to configure said transmitter in accordance with said determination.

Employing application level data such as data indicating a desired power consumption provides increased flexibility and facilitates power management. For example a battery powered device may include a battery monitor and/or user-definable power mode defining an approximate power consumption. Such power consumption constraint data, which may be provided in real time from a battery monitor, allows the MIMO scheme and/or constellation and/or data rate to be modified, for example to reduce the data rate or use a scheme with a lower decoding complexity to reduce the power consumption as the battery discharges and nears the end of its capacity.

The MIMO receiver may include a communications quality of service (QoS) measuring system having measured QoS signal output, and a decision module, said decision module having a first, measured QoS input and a second input to input a signal indicating a desired QoS, and an output to output a MIMO configuration signal, and wherein said decision module is configured to input a said desired QoS signal, determine a first MIMO transmission configuration responsive to said desired QoS signal, output a first MIMO configuration signal for feedback to said transmitter to configure said transmitter in accordance with said determination, input a said measured QoS signal, determine a second MIMO transmission configuration responsive to said measured QoS signal, and output a second MIMO configuration signal for feedback to said transmitter to configure said transmitter in accordance with said second determination.

The MIMO transmission configuration may be modified to take account of the actual, measured quality of service, for example as defined by a block error rate, optionally averaged over time. In embodiments, for example, the choice of MIMO transmission configuration indicated by a lookup table may be followed only if the quality of service is within a desired range, and if not the transmission configuration may be modified. In other embodiments, however, the desired quality of service may be subordinate to other requirements, in particular a power requirement, for example to allow a user to trade off quality against battery life. In one implementation the transmitter may include a data compression or other input signal pre-processing module such as an audio and/or video compression module. In such a case it may be desirable to maintain a pre-determined minimum quality of service in order that decompression at the receiver operates substantially correctly and in this case the MIMO configuration signal generated by the receiver may indicate that a reduced data rate is to be employed. At the transmitter this may be implemented, for example, by increasing the compression ratio and/or decreasing the audio or video data capture resolution. This enables an intelligent adaptation of an entire communications system from an input device, via data compression and, following reception, subsequent decompression, to an output device taking into account requirements of, in particular, quality of service and battery life in order to maintain a service under conditions where this might not otherwise have been possible. The skilled person will appreciate that quality of service, although exemplified later by average block error rate, may additionally or alternatively comprise other parameters, for example data transmission latency.

The skilled person will appreciate that much or substantially all of the above described MIMO communication systems will often be implemented in software, sometime in association with dedicated hardware processors, and that therefore the decision module, in particular will normally comprise some form of computer programme or processor control code stored in memory.

In embodiments of the above described systems the desired quality of service signal may comprise a signal indicating a type of data to be transmitted, for example one of a number of categories such as streamed media (audio and/or video), email/web traffic, and the like. Each of these categories of data may be associated with a minimum acceptable quality of service level.

The decision module may also take into account other factors, in particular a history of MIMO transmission configurations and/or a channel metric. Here a MIMO transmission configuration includes one or more of a MIMO transmission scheme and/or algorithm, a constellation size, and a data rate. As the skilled person will be aware there are many possible channel metrics which may be employed including signal-to-noise ratio, power-delay profile, capacity, inter-channel correlation as used by Abe et al., ibid, hereby incorporated by reference, and/or a measure of channel condition as described, for example, in EP 1185001 at paragraph 37 (hereby incorporated by reference). The channel metric computation may comprise an average over time and the time over which the average is taken may then be varied according to the type of MIMO channel. For example in an indoor, office environment the MIMO channel is expected to change only slowly whereas outdoors the MIMO channel will change at a speed dependent upon the relative speed of motion of the transmitter and receiver, for example slowly for a pedestrian and fast for an in-car user. An indication of channel type may be provided to the channel metric computation module either, for example, from a pre-configuration in hardware, or from a channel estimation module within the receiver, or from the decision module, for example by observing the average block error rate.

In a preferred embodiment the decision module incorporates a lookup table for determining a MIMO transmission scheme and constellation (and optionally data rate) responsive to parameters such as a power constraint and a data type, and also a decision modifier to optionally modify data read from the lookup table responsive to, say, a measured quality of service such as a block error rate. In other embodiments a desired and/or measured quality of service may provide an input to the lookup table and the data read from this table may then be modified by, say, a power constraint signal in order to allow an overriding power constraint to take priority over one or more other parameters. The skilled person will appreciate that other combinations of parameters serve as inputs to the lookup table and inputs to the decision modifier may also be employed.

In some preferred embodiments of the system the receiver is configured to share computational resources between a channel metric computation module or component and a MIMO decoding module or component. This may be achieved by performing a decomposition of the MIMO channel matrix as estimated at the receiver, for example a QR or SVD decomposition, to provide intermediate data which is usable for both a channel metric computation and for decoding a received MIMO signal. Additionally or alternatively in these or other embodiments the speed/economy of the receiver may be improved by, in effect, combining the MIMO channel matrix estimation procedure with the MIMO channel matrix estimate decomposition. In a MIMO system channel estimation may be performed by transmitting a training sequence from each transmit antenna in turn (listening on all the receive antennas), or by simultaneously transmitting substantially orthogonal training sequences from all the transmit antennas. With both procedures, but particularly with the former, the MIMO channel estimate matrix may be constructed column by column, and it has been appreciated that QR and other matrix decompositions may also be performed column-by-column, in step with construction of the channel estimate matrix. As an example, the classical Gram-Schmidt algorithm used for QR decomposition, generates one column of both Q and R per algorithm step (see, for example, Golub G.H., Van Loan C.F., Matrix computations 3rd ed., Johns Hopkins Univ. Pr. Baltimore, Md, 1996, in particular, section 5.2.7). For an example of a more sophisticated technique, namely sorted-QR decomposition, reference may be made to Wubben D., Bohnke R., Rinas J., Kuhn V., Kammeyer K.D., Efficient algorithm for decoding layered space-time codes, IEEE Electronics Letters, Vol. 37, No. 22, Oct. 2001. Equally, depending upon the definitions, the channel estimation and decomposition may proceed row by row. In either case the underlying idea is that channel estimation and decomposition of the channel matrix, as a prelude to decoding/channel condition estimation, may be performed substantially in parallel, thus assisting the decoder in working faster.

The MIMO receiver may further include a channel metric computation module having a channel metric output and a decision module, said decision module having a channel metric input and an output for sending a MIMO configuration signal to said MIMO transmitter, said decision module being configured to determine a MIMO transmission configuration responsive to said channel metric input and to output a MIMO configuration signal for feedback to said transmitter to configure said transmitter in accordance with said determination; wherein said receiver is further configured to estimate a MIMO channel response matrix for decoding a received signal and for computing a said channel metric, and to determine a decomposition of said channel response matrix, for computing a said channel metric and/or decoding a received signal, in parallel with said channel response estimation.

The MIMO receiver may further include channel metric computation module having a channel metric output and a decision module, said decision module having a channel metric input and an output for sending a MIMO configuration signal to said MIMO transmitter, said decision module being configured to determine a MIMO transmission configuration responsive to said channel metric input and to output a MIMO configuration signal for feedback to said transmitter to configure said transmitter in accordance with said determination; wherein said receiver is further configured to estimate a MIMO channel response matrix for decoding a received signal and for computing a said channel metric, and to determine a decomposition of said channel response matrix, for computing a said channel metric and for decoding a received signal using shared computational resources.

In other aspects the invention provides a receiver, as described above.

The receiver may comprise: a MIMO channel matrix estimator to estimate a MIMO channel response matrix for decoding a received signal; and a matrix decomposition module to determine a decomposition of said channel response matrix for decoding a received signal; and wherein said receiver is configured to estimate said channel response in parallel with said channel matrix response decomposition determination.

The invention also provides a method of configuring an adaptive MIMO communications system comprising a MIMO transmitter and a MIMO receiver and having a feedback path from said receiver to said transmitter, said MIMO transmitter including a receiver to receive a feedback signal from said receiver sent via said feedback path and a controller responsive to said feedback signal to configure a MIMO transmission from said transmitter to said receiver, said MIMO receiver being configured to receive said MIMO transmission, the method comprising: inputting a signal indicating a desired receiver power consumption; determining a MIMO transmission configuration responsive to said power indicating input; and outputting a MIMO configuration signal for feedback to said transmitter to configure said transmitter in accordance with said determination.

The method may further comprise: inputting a desired communications quality of service (QoS) signal; determining a second MIMO transmission configuration responsive to said desired QoS signal; outputting said second MIMO configuration signal for feedback to said transmitter to configure said transmitter in accordance with said determination; measuring a communications quality of service (QoS); determining a third MIMO transmission configuration responsive to said measured QoS; and outputting a third MIMO configuration signal for feedback to said transmitter to configure said transmitter in accordance with said second determination.

The above-described systems, transmitters, receivers and methods may be implemented using processor control code, optionally provided on a data carrier such as a disk, CD-or DVD-ROM, programmed memory such as read-only memory (Firmware), or on a data carrier such as optical or electrical signal carrier. For many applications embodiments of the above-described systems, transmitters, receivers and methods will be implemented on a DSP (Digital Signal Processor), ASIC (Application Specific Integrated Circuit) and/or FPGA (Field Programmable Gate Array). Thus code (and data) to implement embodiments of the invention may comprise code in a conventional programming language such as C, or microcode. However code to implement embodiments of the invention may alternatively comprise code for setting up or controlling an ASIC or FPGA, or code for a hardware description language such as Verilog (Trade Mark), VHDL (Very high speed integrated circuit Hardware Description Language) or SystemC. As the skilled person will appreciate such code and/or data may be distributed between a plurality of coupled components in communication with one another, for example on a network.

These and other aspects of the present invention will now be further described, by way of example only, with reference to the accompanying figures in which:
Figures 1a and 1b show, respectively, an example of a MIMO - time coded communications system with feedback, and an example of a MIMO receiver architecture;
Figure 2 shows a block diagram of an adaptive MIMO receiver according to an embodiment of an aspect of the present invention;
Figure 3 shows a generalised architecture of an intelligent adaptive MIMO system;
Figure 4 shows another architecture of an intelligent adaptive MIMO system;
Figure 5 shows an architecture of an intelligent adaptive MIMO system with memory;
Figure 6 shows an architecture for a MIMO receiver employing resource sharing;
Figures 7a and 7b show, reflectively, a receiver configured to operate in accordance with an embodiment of the present invention, and a flow diagram of an adaptive MIMO process; and
Figure 8 shows an example of a header format of an 802.11a data packet.

Broadly speaking we will describe an intelligent adaptive MIMO system in which decisions on the MIMO encoding and decoding schemes are based upon a range of parameters, as well as an estimated channel metric and the signal-to-noise ratio (or SNR range) also including information from layers above the physical layer such as quality of service requirements and power constraints, further taking into account actual performance indications. In this way embodiments of the adaptive system aim to provide optimum physical layer throughput using a feedback channel from the receiver to the transmitter of a MIMO transceiver system. In embodiments other parameters such as the modulation type of constellation size may also be varied.

In embodiments of the system the upper - or application - layer information may comprise restrictions on a required BLER (block error rate), optionally varied according to the type of data to be sent from the transmitter to the receiver, and/or a CRC (cyclic redundancy check) performance. The power consumption constraints which may be employed, for example in the case of portable devices, may be provided in real time from battery management components. Other parameters input to the decision making process may comprise the signal-to-noise ratio or carrier-to-interference ratio. The physical layer information may also comprise a computed channel metric, for example constructed from information relating to the channel statistics such as SNR, the power delay profile, the channel capacity, the degree of correlation between MIMO channels, and the channel conditions (for example determined by means of Singular Value Decomposition or a similar technique), and optionally any other available information.

Figure 1b shows a typical single-scheme MIMO decoding architecture 150 comprising a plurality of receive antennas 152 providing received signals to a MIMO decoder 154 and to a MIMO channel matrix estimator 156. Channel estimator 156 provides a first output 158a to MIMO decoder 154 comprising an estimate of the MIMO channel matrix, and a second output 158b to the MIMO decoder 154 comprising a signal-to-noise ratio estimate, which is the operating SNR. The MIMO decoder 154 provides a plurality of symbol outputs 160, one for each transmit antenna, comprising estimates of the symbols sent from each transmit antenna, and these symbols are converted back into a bit stream by a symbol-to-bit converter 162 which provides a serial data output 164. MIMO decoder 154 also provides a noise variance estimate (for each symbol) output 161 to the symbol-to-bit decoder. The noise variance information is used by the symbol-to-bit decoder in order to produce soft-value outputs. It will be recognised that apart from antenna front ends and down conversion circuitry (not shown in Figure 1b) generally the received signals will be digitised at an early stage and the architecture illustrated in Figure 1b will therefore comprise a software architecture.

Referring now to Figure 2, this shows an example of an architecture of an intelligent adaptive MIMO receiver 200 embodying aspects of the present invention; for completeness a corresponding MIMO transmitter 280 is also shown.

The receiver 200 of Figure 2 comprises six main sections: a hybrid MIMO decoder system 202, similar to the MIMO decoder of Figure 1b but reconfigurable such that it can be controlled to decode different MIMO algorithms and constellation sizes as needed; a MIMO scheme selection module 204; a data post-processing module 206; a channel condition estimation module 208; a decision module 210; and a feedback system 212.

The MIMO decoder system comprises a plurality of receiver antennas 214 which provide a plurality of received signals to a hybrid MIMO decoder 216 and also to a MIMO scheme and constellation (Q) selector 218 of scheme selection module 204 and to a MIMO channel estimator 220 of channel condition estimation module 208. The channel estimator 220 provides an estimate of a MIMO channel matrix, H, and an SNR estimate of respective outputs 220a, b. The scheme and constellation selector 218 receives and decodes scheme and constellation selection information sent from the MIMO transmitter 280 and provides respective MIMO scheme identification and constellation/Q identification data outputs 218a, b. Typically a packetised data transmission scheme is employed and a packet header information may then include this MIMO scheme and constellation identification data; this may be encoded using a pre-determined default encoding scheme, preferably one which is relatively straightforward to decode. In other arrangements information defining the active MIMO scheme and constellation may be transmitted during a special (pre-arranged) packet transmission, or even at the trailing end of a previously transmitted packet; the information signalling the hybrid MIMO decoder 216 to change scheme should, however, arrive before the actual data to be decoded. To optimise speed the hybrid MIMO decoder reconfiguration may take place at the same time as a channel estimation process.

Examples of MIMO transmission schemes which may be employed include, but are not limited to, Alamouti (a simple space-time code which provides a transmit diversity of two), vertical BLAST (Bell labs Layered Space Time) decoding and Bell labs Layered Time, and other techniques, such as those described in the following references: V. Tarokh, H. Jafarkhani and A. R. Calderbank, "Space-time block codes from orthogonal designs," IEEE Trans. Info. Theory., vol. 45, pp. 1456-1467, July 1999; B. Hassibi and B. Hochwald, "High-rate codes that are linear in space and time," IEEE Trans. Info. Theory., vol. 48, pp. 1804-1824, Jul. 2002); also see G. J. Foschini, "Layered space-time architecture for wireless communication in a fading environment when using multi-element antennas," Bell Labs. Tech. J., vol. 1, no. 2, pp. 41-59, 1996 for BLAST, and S. M. Alamouti, "A simple transmitter diversity scheme for wireless communications," IEEE J. Sel. Area Comm., pp. 1451-1458, Oct. 1998 for Alamouti. Other MIMO decoding schemes are described in the applicant's co-pending UK patent applications numbers 0219056.9 filed 15 August 2002, 0227770.5 filed on 28 November 2002, 0323074.5 filed on 2 October 2003, 0323208.9 filed on 3 October 2003, 0323211.3 filed on 3 October 2003, and 0329230.7 filed on 17 December 2003. Modulation schemes/constellations which may be employed include, but are not limited to, M-PSK and M-QAM. To identify the MIMO scheme and modulation type a simple code can be employed such as 1 = V-BLAST, 1 = 16QAM, and the like.

Referring back to Figure 2, the hybrid MIMO decoder 216 accepts the MIMO scheme and constellation information from outputs 218a, b and the channel estimate and signal-to-noise ratio information from outputs 220a, b as well as one signal from each receive antenna and provides a plurality of symbol outputs 222, one corresponding to each transmit antenna, as well as a noise variance for each symbol (222) output 224, these being provided, together with the modulation/constellation type information from output 218b, to a symbol-to-bit converter 226 which provides an output bit stream 228 comprising an estimate of a bit stream provided to MIMO transmitter 280. This bit stream is provided to the data post-processing module 206 which may include a variety of other processing 230, for example channel decoding using, say, a Viterbi decoder, and a CRC check 232. The skilled person will recognise that depending upon the receiver implementation a range of functions may be provided within data-post processing module 206 and the components shown in Figure 2 are merely meant to illustrate, in general terms, some of the options. However, broadly speaking, the data post-processing module 206 provides a data output 234 to higher level modules, for example medium-access control (MAC) layer modules and application layer modules such an audio and/or video decoder. Data post-processing module 206 also provides a channel statistics data output 236 comprising statistical data relating to an actual (measured) channel performance, for example comprising an instantaneous or average block error rate (BLER). This measured statistical information is provided to the decision module 210.

Referring back to the channel condition estimation module 208, as well as a channel estimator 220 this also includes a channel metric computation module 238 having an input from the MIMO channel estimate output 220a of channel estimator 220 and providing a channel metric data output 240 to decision module 210. The channel metric computation module 238 may operate in any conventional manner to compute a channel metric based upon, for example, QR factorisation or SVD (singular value decomposition). Some channel metric computation techniques are described in the prior art documents to which reference has already been made (in particular EP 1185001 and Abe et al.); alternatively where, for example SVD is employed then a channel condition metric may be determined from the ratio of the largest to the smallest singular value. Additionally or alternatively the smallest singular value and/or diagonal element may be employed as an indicator of the applicability or robustness of a particular MIMO transmission scheme.

The channel condition may be computed as an average over time and the channel metric computation module 238 may be provided with a channel type data input 242 indicative of the type of MIMO channel, for example indoor or outdoor, and this information may be used to determine over what period to average. For example for an indoor environment it may be appropriate to average over a period of from 1 to 10 seconds whereas for an outdoor environment it may be appropriate to average over a period of less than 1 second or possibly less than 0.1 second. Additionally or alternatively the channel metric computation module may determine a channel metric using one or more of channel statistics such as the power delay profile, the channel capacity, and the correlation between the MIMO channels. As previously mentioned generally channel estimator 220 will determine a channel estimate by making use of a known training sequence. Broadly speaking the channel estimator and/or channel metric computation module can be assisted by being provided with information relating to the channel characteristics or type, which can assist in adapting to an optimum sampling rate and which can improve tracking performance and, more generally, provide improved estimates of the channel/channel statistics.

Referring now to the decision module 210, this incorporates two main components, a lookup table 244 and decision logic 246, and optionally may further include an average SNR estimator 248. The lookup table 244 is configured to receive a number of parameters indexing entries within the table and to provide a pair of outputs 244a, b identifying a MIMO transmission scheme and constellation size/type respectively. The input parameters, in the illustrated embodiment, comprise a power constraint input for index 244c, a data type input or index 244d, a channel metric input or index 240, and an average SNR input or index 244e. Each of these input parameters effectively acts as a dimension of the lookup table 244, a set of input parameters identifying a pre-determined MIMO scheme and constellation for output. The data in lookup table 244 will depend upon the particular implementation of the MIMO system, the power constraints, the required performance, and the like. The skilled person will appreciate that data for the lookup table may readily be determined by routine experiment, for example by measuring the power consumption of a particular MIMO decoding scheme and by experimentally determining the performance of particular combinations of MIMO schemes and constellation sizes/types under a range of conditions (channel type, data type, average SNR), when subject to a range of minimum quality of service requirements. The results of such routine experiments may then be examined to determine, for a particular set of input parameters, a third MIMO scheme and constellation size/type and this data can then be permanently (or upgradably) stored in the lookup table to 244 which may comprise, for example, ROM or Flash RAM. Additionally or alternatively the lookup table may store data relating to the expected performance of a range of combinations of MIMO schemes and constellation sizes/types (which the hybrid MIMO detector can support) and also data relating the expected power consumption for each of these schemes/constellation types, for a subset of or for all possible input parameter values. In either case the lookup table is then effectively configured to respond to a query from the decision logic component 246 comprising, for example, a channel metric, SNR, data type, and/or power constraint, by outputting data identifying the optimal MIMO transmission scheme and constellation type/size to employ. For example, for a power constrained application a simple scheme such as an Alamouti scheme may be employed whereas when more power is available a BLAST-type scheme using a high-performance high-complexity MIMO decoder may be employed.

In embodiments of the receiver the outputs 244a, b from lookup table 244 may be taken to define the MIMO scheme and constellations to be employed by the transmitter 280. However in preferred embodiments the decision module 210 incorporates a decision logic component 246 which is able to modify the supposed optimal scheme/constellation output from the lookup table, in particular to provide feedback based upon actual measured performance of a selected scheme/constellation. This information is provided to the decision logic 246 from the post-processing module 206, for example via output 236 from CRC check unit 232 (although since the output of a CRC check is generally simply a logic value, true or false - pass or fail, this may need to be converted to a statistic). The decision logic 246 facilitates modification of the outputs from lookup table 244 in many ways. For example if the selected scheme/constellation provides a block error rate within a desired range then the scheme/constellation may be left unchanged, otherwise it may be modified. Additionally or alternatively the lookup table 244 may suggest a power hungry MIMO decoding scheme but other information may indicate, for example, that a battery has only a few minutes of life left, in which case the choice can be modified to a simpler scheme, requiring less processing power to decode, and hence extending the available battery life. Alternatively if the measured block error rate (or other statistic) implies that the quality of service is higher than necessary the scheme/constellation may be modified to deliver a higher data throughput at a lower, but still acceptable quality of service. (The skilled person will appreciate that a statistical error rate is a useful measure of a quality of service although other measures, such the number of retransmissions required to substantially ensure error-free packet reception may also be employed. The decision logic component may also take account of user inputs or settings, for example to define an operating mode of the system. In embodiments decision logic component 246 has or can derive knowledge of the channel type (for example how fast it changes and whether it is an indoor or an outdoor environment) and of the data type (for example non-time critical data for web browsing, time-critical data for video transmission, required transmission quality for video, and the like), for example in the form of BLER requirements.

As previously mentioned the average SNR estimator 248 may also provide an input to lookup table 244. The SNR estimator 248 receives estimated SNR data from channel estimator 220 and calculates a running or windowed average of this, and is preferably re-settable by an output 246a from decision logic component 246, for example when the MIMO scheme/constellation changes or at other times when the channel characteristics may change.

The decision logic component 246 of decision module 210 provides an output 246b to feedback path module 212 comprising data identifying a MIMO scheme and constellation size/type. This information is sent back to MIMO transmitter 280 by any convenient communications method, which may or may not comprise wireless communications. In the illustrated example the scheme/constellation data is provided to a buffer 248 and thence to a transmit antenna 250 which sends the data back to a receive antenna 282 coupled to MIMO transmitter 280 so that the MIMO transmitter can receive the scheme/constellation command data and configure the transmissions accordingly. As illustrated in the example of Figure 2 MIMO transmitter 280 is configured to transmit video data compressed by a video data compression module 284.

The feedback path from the receiver 200 to the transmitter 280 need only be relatively low bandwidth as the information to be sent, that is the receiver's estimate of the optimal scheme and constellation type/size for recurrent period of time, may be defined by just a few bits. For example a single bit may be employed for scheme selection for a hybrid decoder with two schemes, such as Alamouti and BLAST (or similar techniques), and two bits may be employed to define a constellation size if choosing between four types, for example BPSK (binary phase shift keying), QPSK (quadrature PSK), 16-QAM, and 64-QAM. Thus, for example, this information may be included in headers sent inside acknowledgement packets (as sending such acknowledgement packets is normal for applications with a defined quality of service requirement). Thus buffer 248 may comprise a header transmit queue.

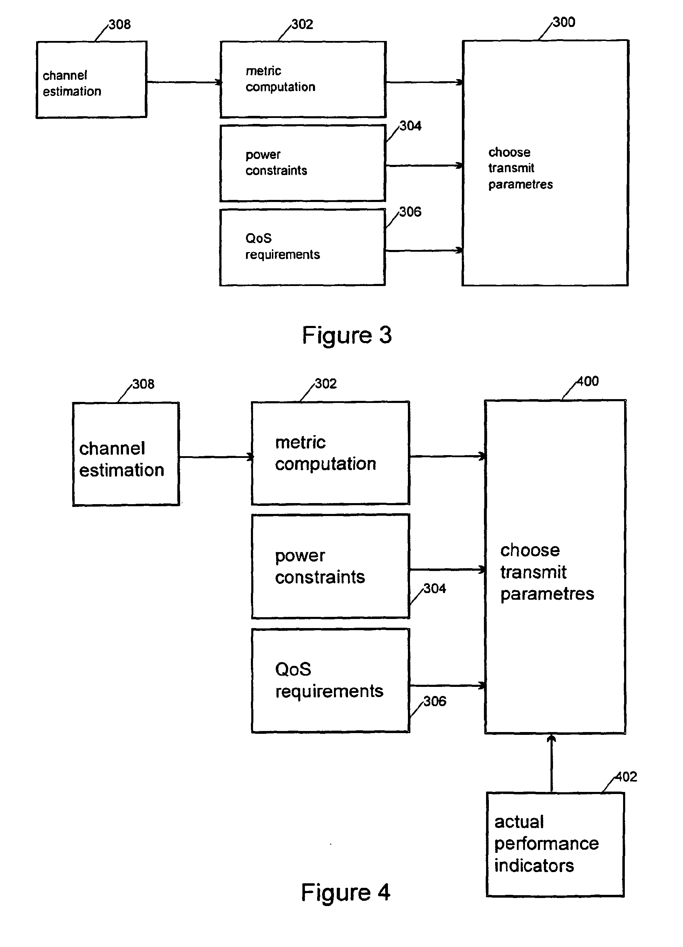

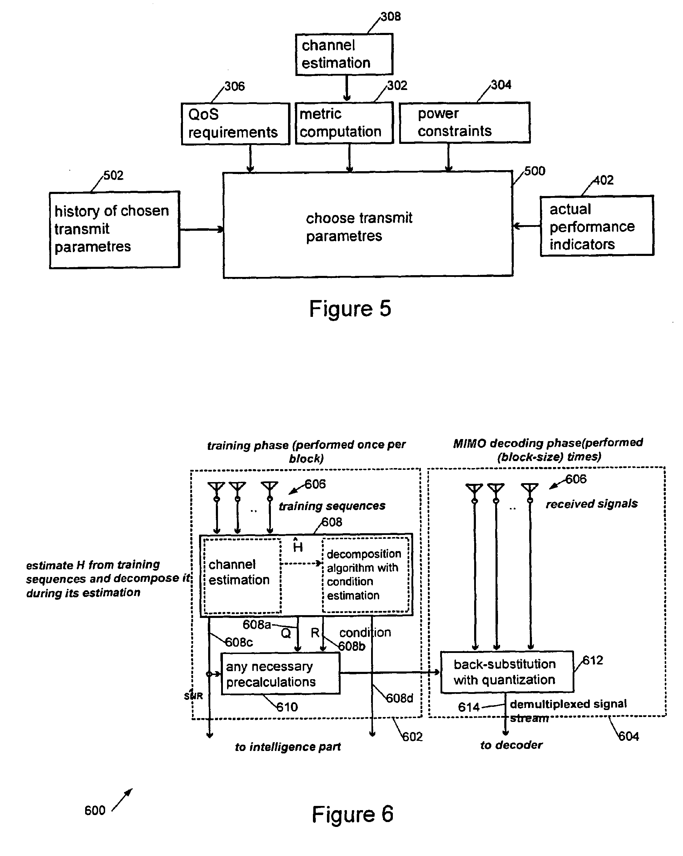

Figures 3 to 5 illustrate generic architectures for intelligent adaptive MIMO systems as described in detail above with reference to Figure 2. Thus in Figure 3 a transmit parameter selection/decision module 300 receives inputs from a metric computation module 302, a power constraint determining module 304, and a quality of service requirements module 306, the metric computation module 302 in turn receiving an input from a channel estimation module 308. The architecture of Figure 4 is similar except that the selection/decision module 400 also receives an input from one or more actual performance indicators 402; the arrangement of Figure 5 has a selection/decision module 500 which further receives or has knowledge of a history of chosen transmit parameters 502 (scheme and/or constellation size/type).

In particularly preferred embodiments of the receiver signal processing resources can be shared to increase the processing and/or reduce power consumption (or possibly silicon area). This based upon a recognition that, firstly, decomposition of the MIMO channel estimate matrix can be used as a precursor to both determining a channel condition or metric and decoding received data, and secondly that decomposition of the channel estimate matrix can proceed in parallel with a determination of the channel estimation matrix itself. As is well-known to the skilled person, MIMO decoding generally relies upon some form of factorisation of the matrix channel estimate, such as QR factorisation or SVD factorisation, to estimate the transmitted symbols (see, for example, Wubben D., Bohnke R., Rinas J., Kuhn V., Kammeyer K.D., Efficient algorithm for decoding layered space-time codes, IEEE Electronics Letters, Vol. 37, No. 22, Oct. 2001). However the channel metric computation may also rely upon or be simplified by a decomposition of the matrix channel estimate and thus by configuring the receiver so that there is a common initial stage of decomposition or factorisation of the MIMO channel estimate matrix the computational load in the receiver may be reduced. For example, as mentioned above, a channel condition may be determined by taking the ratio of highest to lowest singular values of a singular value decomposition. The SVD may be determined via a QR factorisation (see, for example, Golub G.H., Van Loan C.F., Matrix computations 3rd ed., Johns Hopkins Univ. Pr. Baltimore, Md, 1996, in particular paragraph 3.54, algorithm 3.5.1, hereby incorporated by reference), or alternatively QR factorisation may be used to determine the channel conditions directly.

Figure 6 shows a portion of a MIMO receiver 600 which schematically illustrates this procedure, showing how resources may be shared between an intelligent or adaptive part of the receiver, for example using channel condition information, and a decoding part of the receiver, in the illustrative example employing a back substitution-algorithm. The two dashed boxes 602, 604 of Figure 6 indicate a training phase of the receiver's operation and a decoding phase of the receiver's operation respectively; physically the two sets of receive antennas 606 are the same. In the training phase the receiver receives training sequences, for example at the start of a packet, which are provided to a channel estimation/decomposition module 608. This module performs a channel estimation and matrix decomposition, preferably in parallel as described further below, determining a QR factorisation of the MIMO channel estimate matrix and providing Q and R matrix outputs 608a, b, an estimated signal-to-noise ratio output 608c, and a channel condition output 608d, for example based upon highest to lowest singular value ratio. Optionally the Q and R values may be pre-processed or transformed by a precalculation component 610 in order to simplify and/or improve the reliability of a subsequent back-substitution procedure. For example values inside the matrix R which are very close or equal to 0 can cause problems when performing back-substitution 612, effectively because they are used as divisors in division operations (for a formulation of back-substitution algorithm - see, for example, Golub G.H., Van Loan C.F., Matrix computations 3rd ed., Johns Hopkins Univ. Pr. Baltimore, Md, 1996, in particular section 3.1.2). This can result in erroneously estimating the transmitted symbols and can also result in arithmetic overflows during the division operations of the decoding hardware, and these values may therefore be adjusted. Any necessary pre-calculations may be performed after or during (as described further below) channel estimation at the start of a block. The precalculation step 610 can also function in-place of the back-substitution demultiplexing algorithm 612 as described, for example, in Golub et al. section 5.7.1.

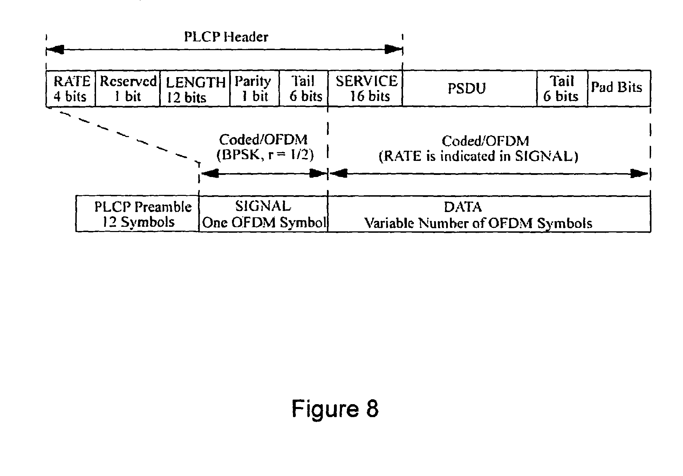

The training phase 602 is generally performed no more frequently than once for each block of received symbols processed but the decoding is performed for each set of received data symbols. As a general example, figure 8 shows a block of symbols according to the IEEE 802.11a standard IEEE Std 802.11a-1999 [ISO/IEC 8802-11:1999/Amd 1:2000(E)] (Supplement to IEEE Std 802.11, 1999 Edition) Part 11: Wireless LAN Medium Access Control (MAC) and Physical Layer (PHY) specifications: High-speed Physical Layer in the 5 GHz Band (in particular a PPDU frame format). This specifies an OFDM system with OFDM symbols comprising two parts: a header part which occupies the first OFDM symbols during a transmission and includes a specific training sequence of symbols used for channel estimation in the PLCP Preamble symbols, and a SIGNAL part which provides information on the modulation type and coding rate used for the following OFDM symbols. The PLCP Preamble and SIGNAL OFDM symbols are followed (in time) by the data part that carries several OFDM symbols carrying the data symbols which are decoded by the receiver (decoding phase). Thus in the decoding phase 604 the QR decomposition, pre-processed as necessary, is provided to, for example, a back-substitution module 612 with quantisation to provide a demultiplexed signal stream 614 for further processing.

Broadly speaking, apart from a noise term a received signal vector **y** is given by **y** = **Q·R·c** where c is a transmitted signal vector, and thus knowing **y, Q** and **R,** because Q can be easily inverted as its transpose is the inverse from definition (of the QR decomposition) and multiplied by y and because **R** is an upper triangular matrix the symbol c can be determined element by element, starting by determining Cₙ from Q^{T}yₙ and working backwards, for each c-value in turn quantising the value to the closest constellation point. As the channel estimate and channel metric computation are performed only once per block of transmitted symbols the MIMO decoder can use a straightforward back-substitution method with quantisation for estimating each symbol in the block, whilst simplifying the channel metric computation process.

In order to improve the speed of operation of the receiver the QR or other decomposition may be performed in parallel with the channel estimation procedure. For example the channel estimation may be performed column-by-column and the QR decomposition procedure may also allow decomposition on a column-by-column basis. As an example, consider the modified-Gram Schmidt (mGS) algorithm used for QR decomposition. The first steps of the mGS algorithm are:
1. R(1,1) = norm (1st column of H)
2. 1st column of Q = (1st column of H) / R(1, 1)
3. R(1,2)= (first column of Q)' * (2nd column of H)
4. (2nd column of H) = (2nd column of H) - R(1,2) * (1st column of Q)
5. R(1,3)= (first column of Q)' * (3rd column of H)
6. (3rd column of H) = (3rd column of H) - R(1,3) * (1st column of Q)
7. R(1,4)= (first column of Q)' * (4th column of H)
8. (4th column of H) = (4th column of H) - R(1,4) * (1st column of Q)
9. Remaining steps

Steps 1 and 2 use the first column of H, steps 3 and 4 use the second, 5 and 6 use the third and steps 7 and 8 use the fourth column of H. It is therefore possible to parallelize the channel estimation process with those first steps of the modified-Gram Schmidt (mGS) algorithm. The estimation and decomposition steps are:
1. Estimate 1st column of H.
2. Perform steps 1 and 2 of mGS while estimating 2nd column of H.
3. Perform steps 3 and 4 of mGS above while estimating 3rd column of H.
4. Perform steps 5 and 6 of mGS above while estimating 4th column of H.
5. Perform steps 7 and 8 of mGS.
6. Continue with remaining steps of mGS.

Thus in Figure 6 the two elements indicated by dashed lines in module 608, channel estimation, and decomposition, may in fact comprise a single, unified procedure. In such a case determination of the channel condition estimation metric may comprise a different component or module of the architecture and this component may operate, for example, during and in parallel with the back-substitution procedure.

It is also known to perform channel estimation by determining a decomposition or factorisation such as an SVD or QR factorisation. Examples of such channel estimators (including blind equalisation without requiring noise variants estimation) are described in Edfors O., Sandell M., van de Beek J-J, Wilson S.K., Borjesson P.O., OFDM Channel estimation by Singular Value Decomposition, IEEE Transactions on Communications, Vol. 46, No. 7, July 1998 and Li X., Fan H.(H), QR Factorization Based Blind Channel Identification and Equalization with Second-Order Statistics, IEEE Transactions on Signal Processing, Vol. 48, No. 1, Jan 2000. Such systems effectively allow the decomposition and channel estimation portions of module 608 to be exchanged.

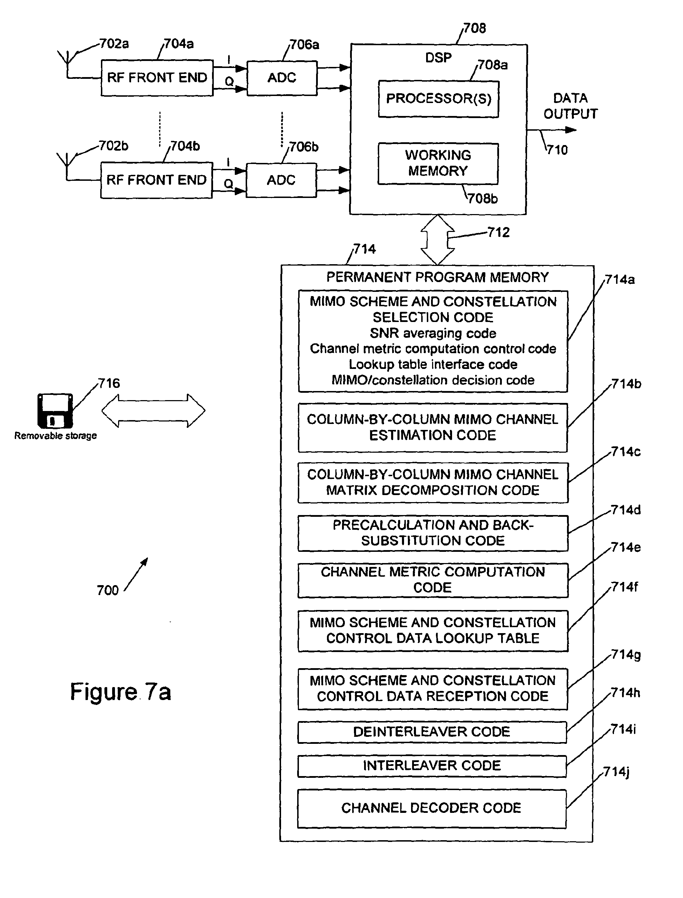

Figure 7a shows a receiver 700 incorporating an adaptive MIMO decoder and configured to implement the above described techniques.

Receiver 700 comprises one or more receive antennas 702a, b (of which two are shown in the illustrated embodiment) each coupled to a respective RF front end 704a, b, for example similar to the RF front end of Figure 2a, and thence to a respective analogue-to-digital converter 706a,b and to a digital signal processor (DSP) 708. DSP 708 will typically include one or more processors 708a (for example, for a parallel implementation of filter 414) and some working memory 708b. The DSP 708 has a data output 710 and an address, data and control bus 712 to couple the DSP to permanent program memory 714 such as flash RAM or ROM. Permanent program memory 714 stores code and optionally data structures or data structure definitions for DSP 708.

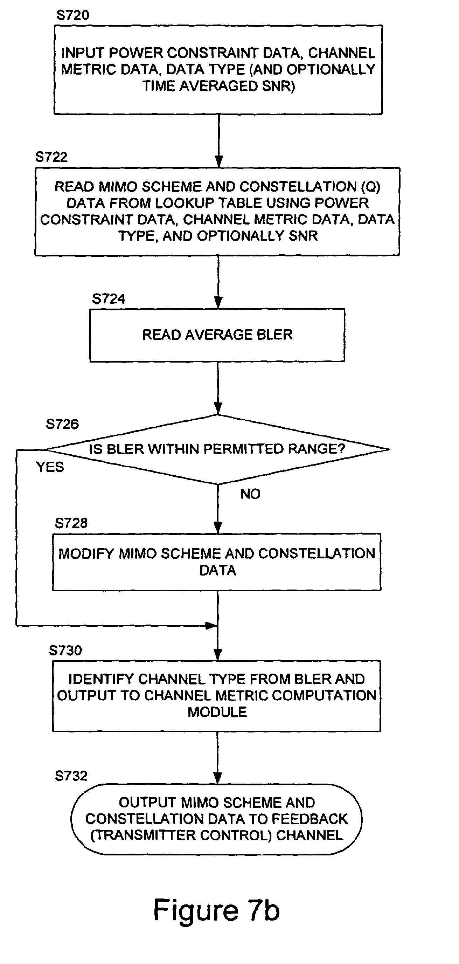

As illustrated program memory 714 includes MIMO scheme and constellation selection code comprising SNR averaging, channel metric computation control, lookup table interface and MIMO/constellation decision components to, when running on DSP 708, implement corresponding functions as described above. Program memory 714 also includes column-by-column MIMO channel estimation code 714b to provide a MIMO channel estimate H, column-by-column MIMO channel matrix decomposition code 714c, (optional precalculation and) back-substitution code 714d, channel metric computation code 714e, a lookup table 714f comprising data for selecting a MIMO scheme and constellation size/type, MIMO scheme and constellation size/type control data reception code 714g, and optionally de-interleaver code 714h, interleaver code 714i, and channel decoder code 714j. Examples of suitable code 714e are well known to those skilled in the art. Optionally the code in permanent program memory 714 may be provided on a carrier such as an optical or electrical signal carrier or, as illustrated in Figure 7, a floppy disk 716.

The data output 710 from DSP 708 is provided to further data processing elements of receiver 700 (not shown in Figure 7) as desired. These may a baseband data processor for implementing higher level protocols.

The receiver front-end will generally be implemented in hardware whilst the receiver processing will usually be implemented at least partially in software, although one or more ASICs and/or FPGAs may also be employed. The skilled person will recognise that all the functions of the receiver could be performed in hardware and that the exact point at which the signal is digitised in a software radio will generally depend upon a cost/complexity/power consumption trade-off.

Figure 7b shows an outline flow diagram illustrating the operation of the MIMO scheme and constellation selection code 714a of the receiver 700 of Figure 7a. At step S720 the code receives power constraint data, channel metric data, data type data and optionally time averaged SNR data and, at step S722, uses these data to read data identifying a MIMO scheme and constellation from lookup table 714F. At step S724 the code reads the average block error rate and, and at step S726, determines whether or not this is within a permitted range (S726), if not modifying the MIMO scheme and/or constellation recommended by the lookup table (S728). Optionally, at step S730, the scheme/constellation selection code identifies a channel type from the block error rate and outputs channel-type data to the channel metric computation module 714e (which may modify the MIMO scheme/constellation indicated by the lookup table data). Then, at step S732, the MIMO scheme and constellation data are output a feedback (transmitter control) channel for the transmitter to implement. When the change has been implemented the receiver is instructed, as previously described, by transmitting scheme and constellation selection data to the receiver for interpretation and implementation by control data reception code 714g.

Embodiments of the above-described techniques facilitate better adaptation of a MIMO communications system to the channel conditions and other constraints, in particular relating to power consumption. For example a space-time coding scheme such as Alamouti employs diversity to decrease the bit error rate and is thus robust to afford channel conditions and noise but typically has a maximum rate (compared with a single-in-out system) of unity, whilst a spatial multiplexing scheme such as BLAST potentially offers a maximum rate equal to the number of transmit antennas but which can drop significantly (even below unity) for ill-conditioned channels and/or low SNRs. Despite this the need to operate at low SNRs can be important for portable devices in order to save power but in other situations a more complex multiplexing algorithm at the expense of an increased power consumption may be preferred. Furthermore some applications require a threshold minimum error rate and spatial multiplexing algorithms can fail to deliver this when the SNR is low or when ill-conditioning of the channel is high. Water-filling schemes (distributing power to transmit antennas dependent upon SNRs) provide some degree of adaptation but can require significantly higher levels of feedback than is the case with the techniques described above. The above-described techniques take into account a range of factors and can provide significantly improved performance over prior art techniques. The generalised architectures for implementing these techniques are schematically illustrated in Figures 3 to 5, as described above. For example, referring to Figure 5, in which information relating to previously selected MIMO scheme/constellation parameters is used as one of the input parameters for selecting a scheme/constellation type, only small changes in rate may be permitted so that the system adapts gradually to different requirements, say by switching between algorithms that are close in, for example, error rate performance. Thus the selection of a new MIMO scheme/constellation may be dependent upon the scheme having a predicted or actual data or error rate which is no greater than a threshold difference from that currently employed.

In embodiments of systems employing the above-described techniques it is also possible to weight one or more requirements according to their importance - for example where estimation of a channel metric is expected to be unreliable this may be given a reduced weight so as not to cause abrupt changes in the transmit parameters, with a consequent risk of unexpected communications failure. By contrast other parameters, for example power constraints, could be given an increased weight so that these produce a significant change in the transmit parameters suitable for, say, adapting a terminal to either mains or battery operation.

In the above described techniques another important parameter that can be adapted additionally or alternatively to the constellation size/modulation order is the channel coding rate and, optionally, the coding algorithm (i.e., referring to elements of Figure 1, encoder 104, decoder 120) and this is contemplated in embodiments/aspects of the invention. Thus in this document channel coding rate/algorithm may effectively be read/understood in addition to and/or in place of references to constellation or a constellation parameter.

Embodiments of the above-described adaptive MIMO communications system can provide a minimum throughput guarantee for applications requiring operation at or below a given error rate, providing the channel and SNR permit (therefore satisfying quality of service requirement). The described techniques are also helpful for adapting the power consumption of the receiver, for example by trading throughput and complexity. In this way, providing operational conditions permit, embodiments of the system can effectively ensure a performance floor over an envelope of channel metric/SNR/QoS requirements. We have also described how computational resources, in particular relating to MIMO channel matrix decomposition, can be re-used in order to reduce hardware complexity and/or power consumption and/or optionally increase speed.

Embodiments of the above-described techniques have applications in a wide range of MIMO communications systems including base stations, access points, and mobile terminals/devices. MIMO schemes for use in the adaptive communications process may be selected from very simple schemes such as Alamouti to complex space-time and/or frequency MIMO schemes such as BLAST or sphere decoding. Broadly speaking embodiments of the invention facilitate improved or at least a more consistent level of performance and/or, depending upon the conditions and parameters, increased data rates and/or, in particular embodiments, more efficient use of hardware resources.

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. An adaptive MIMO communications system comprising a MIMO transmitter. (280) and a MIMO receiver (200) and having a feedback path (212) from said receiver to said transmitter,
said MIMO transmitter (280) including a receiver (282) to receive a feedback signal from said receiver sent via said feedback path and a controller responsive to said feedback signal to configure a MIMO transmission from said transmitter to said receiver;
said MIMO receiver (200) being configured to receive said MIMO transmission; and wherein said MIMO receiver (200) includes a decision module (210),
and wherein the system is **characterized by** said decision module (210) having a power indicating input to input a signal indicating a desired receiver power consumption, and an output for sending a MIMO configuration signal to said MIMO transmitter (280), said decision module (210) being configured to determine a MIMO transmission configuration responsive to said power indicating input and to output a MIMO configuration signal for feedback to said transmitter (280) to configure said transmitter (280) in accordance with said determination.

2. An adaptive MIMO system as claimed in claim 1 wherein said receiver (200) further includes a communications quality of service (QoS) measuring system having a measured QoS signal output, and wherein said decision module includes a measured QoS input from said measured QoS output, and a desired QoS input for inputting a signal indicating a desired QoS, and wherein said decision module is further configured to receive a said desired QoS signal, determine a first MIMO transmission configuration responsive to said desired QoS signal, output a first MIMO configuration signal for feedback to said transmitter (280) to configure said transmitter in accordance with said determination, input a said measured QoS signal, determine a second MIMO transmission configuration responsive to said measured QoS signal, and output a second MIMO configuration signal for feedback to said transmitter (280) to configure said transmitter (280) in accordance with said second determination.

3. An adaptive MIMO system as claimed in claim 2 wherein said desired QoS signal comprises a signal indicating into which one of a plurality of categories the data to be transmitted falls.

4. An adaptive MIMO system as claimed in claim 3 wherein said plurality of categories of data define a plurality of minimum acceptable QoS levels.

5. An adaptive MIMO system as claimed in claim 3 or 4 wherein said plurality of categories of data define a plurality of maximum data transmission latencies.

6. An adaptive MIMO system as claimed in any one of claims 2 to 5 wherein said measured QoS signal comprises a block error rate signal.

7. An adaptive MIMO system as claimed in any one of claims 2 to 6 wherein said transmitter includes a data compression module, responsive to said feedback signal, for outputting compressed audio and/or video data for transmission, wherein said decision module is configured to output a MIMO configuration signal indicating that a reduced data rate is to be employed when said measured QoS is less than said desired QoS, and wherein said transmitter is configured control said data compression module responsive to said rate reduction signal to provide a reduced data rate output.

8. An adaptive MIMO system as claimed in any preceding claim wherein said decision module is further configured to determine a said MIMO transmission configuration responsive to a previously determined MIMO transmission configuration.

9. An adaptive MIMO system as claimed in any preceding claim wherein said receiver further includes a channel metric computation module having a channel metric output, and wherein said decision module is further configured to determine a said MIMO transmission configuration responsive to said channel metric output.

10. An adaptive MIMO system as claimed in claim 9 wherein said channel metric computation module has a time determining input, wherein said channel metric is calculated over a period of time responsive to said time determining input, and wherein said decision module is configured to provide a channel type signal to said time determining input, said channel type signal indicating one of a plurality of categories of channel type into which a MIMO channel between said MIMO transmitter and said MIMO receiver falls.

11. An adaptive MIMO system as claimed in claim 9 or 10 wherein said receiver is further configured to estimate a MIMO channel response matrix for decoding a received signal and for computing a said channel metric.

12. An adaptive MIMO system as claimed in claim 11 wherein said receiver is configured to determine a decomposition of said channel response matrix, for computing a said channel metric and/or decoding a received signal, in parallel with said channel response estimation.

13. An adaptive MIMO system as claimed in claim 11 wherein said receiver is configured to determine a decomposition of said channel response matrix, for computing a said channel metric and for decoding a received signal using shared computational resources.

14. An adaptive MIMO system as claimed in any preceding claim wherein said MIMO configuration signal comprises a signal indicating a MIMO transmission scheme or algorithm and/or a constellation size or modulation type.

15. An adaptive MIMO system as claimed in any one of claims 2 to 14 wherein said decision module comprises a look-up table to provide data indicating a preferred MIMO configuration and a decision modifier to modify said preferred MIMO configuration responsive to said measured QoS signal to provide a modified MIMO configuration for outputting as a said MIMO configuration signal.

16. An adaptive MIMO communications system as claimed in any one of the preceding claims, wherein said MIMO receiver (200) further includes a channel metric computation module (23 8) having a channel metric output and a decision module (210), said decision module (210) having a channel metric input and an output for sending a MIMO configuration signal to said MIMO transmitter (280), said decision module (210) being configured to determine a MIMO transmission configuration responsive to said channel metric input and to output a MIMO configuration signal for feedback to said transmitter (280) to configure said transmitter (280) in accordance with said determination; wherein said receiver (200) is further configured to estimate a MIMO channel response matrix for decoding a received signal and for computing a said channel metric, and to determine a decomposition of said channel response matrix, for computing a said channel metric and/or decoding a received signal, in parallel with said channel response estimation.

17. An adaptive MIMO communications system as claimed in any one of claims 1 to 15, wherein said MIMO receiver (200) further includes channel metric computation module (238) having a channel metric output and a decision module (210), said decision module (210) having a channel metric input and an output for sending a MIMO configuration signal to said MIMO transmitter (280), said decision module (210) being configured to determine a MIMO transmission configuration responsive to said channel metric input and to output a MIMO configuration signal for feedback to said transmitter (280) to configure said transmitter (280) in accordance with said determination; wherein said receiver (200) is further configured to estimate a MIMO channel response matrix for decoding a received signal and for computing a said channel metric, and to determine a decomposition of said channel response matrix, for computing a said channel metric and for decoding a received signal using shared computational resources.

18. A MIMO receiver (200) of an adaptive MIMO communications system, the MIMO communications system further comprising a MIMO transmitter (280) and having a feedback path (212) from said receiver to said transmitter, said MIMO transmitter (280) including a receiver (282) to receive a feedback signal from said receiver sent via said feedback path and a controller responsive to said feedback signal to configure a MIMO transmission from said transmitter to said receiver;
wherein the MIMO receiver (200) is configured to receive said MIMO transmission; and
wherein said MIMO receiver (200) includes a decision module (210),
and wherein the receiver is **characterized by** said decision module (210) having a power indicating input to input a signal indicating a desired receiver power consumption, and an output for sending a MIMO configuration signal to said MIMO transmitter (280), said decision module (210) being configured to determine a MIMO transmission configuration responsive to said power indicating input and to output a MIMO configuration signal for feedback to said transmitter (280)..

19. A MIMO receiver (200) as claimed in claim 18, the receiver comprising:
a MIMO channel matrix estimator to estimate a MIMO channel response matrix for decoding a received signal; and
a matrix decomposition module to determine a decomposition of said channel response matrix for decoding a received signal; and
wherein said receiver is configured to estimate said channel response in parallel with said channel matrix response decomposition determination.

20. A method of configuring an adaptive MIMO communications system comprising a MIMO transmitter (280) and a MIMO receiver (200) and having a feedback path (212) from said receiver (200) to said transmitter (280), said MIMO transmitter (280) including a receiver (282) to receive a feedback signal from said receiver (200) sent via said feedback path (212) and a controller responsive to said feedback signal to configure a MIMO transmission from said transmitter (280) to said receiver (200), said MIMO receiver (200) being configured to receive said MIMO transmission,
the method being **characterized by** comprising:
inputting a signal indicating a desired receiver power consumption;
determining a MIMO transmission configuration responsive to said power indicating input; and
outputting a MIMO configuration signal for feedback to said transmitter to configure said transmitter (280) in accordance with said determination.

21. A method as claimed in claim 20, the method further comprising:
inputting a desired communications quality of service (QoS) signal;
determining a second MIMO transmission configuration responsive to said desired QoS signal;
outputting said second MIMO configuration signal for feedback to said transmitter to configure said transmitter in accordance with said determination;
measuring a communications quality of service (QoS);
determining a third MIMO transmission configuration responsive to said measured QoS; and
outputting a third MIMO configuration signal for feedback to said transmitter (280) to configure said transmitter in accordance with said second determination.

22. A carrier medium carrying computer readable code for controlling a microprocessor to carry out the method of any one of claims 20 and 21.

## Patentansprüche

1. Adaptives MIMO-Kommunikationssystem, umfassend einen MlIVIp-Transmitter (280) und einen MIMO-Empfänger (200) und mit einem Feedback-Weg (212) vom Empfänger zum Transmitter,
wobei der MIMO-Transmitter (280) einen Empfänger (282) enthält, um ein Feedback-Signal vom Empfänger zu empfangen, das über den Feedback-Weg gesendet wurde und ein Steuergerät, das auf das Feedback-Signal anspricht, um eine MIMO-Übertragung vom Transmitter zum Empfänger zu konfigurieren;
wobei der MIMO-Empfänger (200) derart konfiguriert ist, um die MIMO-Übertragung zu empfangen und wobei der MIMO-Empfänger (200) ein Entscheidungsmodul (210) enthält und wobei das System durch das Entscheidungsmodul (210) charakterisiert ist, mit einer die Leistung anzeigenden Eingabe, um ein Signal einzugeben, das einen erwünschten Empfingerleistungsverbrauch anzeigt sowie mit einer Ausgabe zum Senden eines MIMO-Konfigurationssignals an den MIMO-Transmitter (280), wobei das Entsckteidungsmodul (210) derart konfiguriert ist, um eine MIMO-Übertragungskonfiguration festzustellen, die auf die die Leistung anzeigende Eingabe anspricht und um eine Ausgabe eines MIMO-Konfigurationssignals zum Feedback an den Transmitter (280) auszugeben, um den Transmitter (280) gemäß der Feststellung zu konfigurierten.

2. Adaptives MIMO-System nach Anspruch 1, wobei der Empfänger (200) ferner ein Kommunikationsdienstgüten- (QoS) Messsystem mit einer gemessenen QoS-Signalausgabe enthält und wobei das Entscheidungsmodul eine gemessene QoS-Eingabe von der gemessenen Qo5-Ausgabe enthält und eine erwünschte QoS-Eingabe zur Eingabe eines Signals, das eine erwünschte QoS anzeigt und wobei das Entscheidungsmodul ferner derart konfiguriert ist, um das erwünschte QoS-Signal zu empfangen, eine erste MIMO-Übertragungskonfiguration festzustellen, die auf das erwünschte QoS-Signal anspricht, ein erstes MIMO-Konfigurationssignal zum Feedback an den Transmitter (280) auszugeben, um den Transmitter gemäß der Feststellung zu konfigurieren, ein gemessenes QoS-Signal einzugeben, eine zweite MIMO-Ubertragungskonfiguration festzustellen, die auf das gemessene QoS-Signal anspricht und ein zweites MIMO-Konfigurationssignal zum Feedback an den Transmitter (280) auszugeben, um den Transmitter (280) gemäß der zweiten Feststellung zu konfigurieren.

3. Adaptives MIMO-System nach Anspruch 2, wobei das erwünschte QoS-Signal ein Signal umfasst das anzeigt, in welche einer vielzahl von Kategorien die zu übertragenden Daten einzustufen sind.

4. Adaptives MIMO-System nach Anspruch 3, wobei die Vielzahl von Kategorien eine Vielzahl akzeptabler QoS-Mindestniveaus definiert.

5. Adaptives MIMO-System nach Anspruch 3 oder 4, wobei die Vielzahl von Kategorien an Daten eine Vielzahl eines Maximums an Datenübertragungslatenzen definiert.

6. Adaptives MIMO-System nach einem der Ansprüche 2 bis 5, wobei das gemessene QoS-Signal ein Blockfehlerratensignal umfasst.

7. Adaptives MIMO-System nach einem der Ansprüche 2 bis 6, wobei der Transmitter ein Datenverdichtungsmodul enthält, das auf das Feedback-Signal anspricht, zur Ausgabe von verdichteten Audio- und/oder Videodaten zur Übertragung, wobei das Entscheidungsmodul derart konfiguriert ist, um ein MIMO-Konfigurationssignal auszugeben das anzeigt, dass eine reduzierte Datenrate eingesetzt wird, wenn die gemessene QoS weniger als die erwünschte QoS beträgt und wobei der Transmitter derart konfiguriert ist, um das Datenverdichtungsmodul derart zu steuern, dass es auf das Ratenreduktionssignal anspricht, um eine reduzierte Datenratenausgabe bereitzustellen.

8. Adaptives MIMO-System nach einem der vorstehenden Ansprüche, wobei das Entscheidungsmodul ferner derart konfiguriert ist, um eine MIMO-Überfragungskonfiguration festzustellen, die auf eine zuvor festgestellte MIMO-Übeztragungskonfiguration anspricht.

9. Adaptives MIMO-System nach einem der vorstehenden Ansprüche, wobei der Empfänger ferner ein Kanalmetrik-Errechnungsmodul mit einer Kanalmetrikausgabe enthält und wobei das Entscheidungsmodul ferner derart konfiguriert ist, um eine MIMO-Übertragungskonfiguration festzustellen, die auf die Kanalmetrikausgabe anspricht.

10. Adaptives MIMO-System nach Anspruch 9, wobei das Kanalmetrik-Errechnungsmodul eine Zeitfeststellungseingabe aufweist, wobei die Kanalmetrik über einen Zeitraum errechnet wird, der auf die Zeitfeststellungseingabe anspricht und wobei das Entscheidungsmodul derart konfiguriert ist, um ein kanalartiges Signal an die Zeitfeststellungseingabe bereitzustellen, wobei das kanalartige Signal eine von einer Vielzahl von Kategorien an Kanalarten anzeigt, in die ein MIMO-Kanal zwischen dem MIMO-Transmitter und dem MIMO-Empfänger eingestuft werden kann.

11. Adaptives MIMO-System nach Anspruch 9 oder 10, wobei der Empfänger ferner derart konfiguriert ist, um eine MIMO-Kanalantwortmatrix zum Entschlüsseln eines empfangenen Signals und zum Errechnen einer Kanalmetrik zu schätzen.

12. Adaptives MIMO-System nach Anspruch 11, wobei der Empfänger derart konfiguriert ist, um einen Abbau der Kanalantwortmatrix zum Errechnen der Kanalmetrik und/oder zum Entschlüsseln eines empfangenen Signals parallel zur Kanalantwortschätzung festzustellen.

13. Adaptives MIMO-System nach Anspruch 11, wobei der Empfänger derart konfiguriert ist, um einen Abbau der Kanalantwortmatrix zum Errechnen einer Kanalmetrik und zum Entschlüsseln eines empfangenen Signals festzustellen, das geteilte Berechnungsressourcen einsetzt.

14. Adaptives MIMO-System nach einem der vorstehenden Ansprüche, wobei das MIMO-Konfigurationssignal ein Signal umfasst, das ein MIMO-Übertragungsschema oder-algorithmus und/oder eine Konstellationsgröße oder Modulationsart anzeigt.

15. Adaptives MIMO-System nach einem der Ansprüche 2 bis 14, wobei das Entscheidungsmodul eine Nachschlagetabelle umfasst, um Daten bereitzustellen, die eine bevorzugte MIMO-Konfiguration anzeigen und einen Entscheidungsmodifizierer, um die bevorzugte MIMO-Konfiguration, die auf das gemessene QoS-Signal anspricht, zu modifizieren, um eine modifizierte MIMO-Konfiguration zur Ausgabe an das MIMO-Konfigurationssignal bereitzustellen.

16. Adaptives MIMO-Kommunikationssystem nach einem der vorstehenden Ansprüche, wobei der MIMO-Empfänger (200) ferner ein Kanalmetrik-Errechnungsmodul (238) enthält, das eine Kanalmetrikausgabe und ein Entscheidungsmodul (210) aufweist, wobei das Entscheidungsmodul (210) eine Kanalmetrikeingabe und eine Ausgabe zum Senden eines MIMO-Konfigurationssignals an den MIMO-Transmitter (280) aufweist, wobei das Entscheiduugsmodul (210) derart konfiguriert ist, um eine MIMO-Übertragungskonfiguration festzustellen, die auf die Kanalmetrikeingabe anspricht und um ein MIMO-Konfigurationssignal zum Feedback an den Transmitter (280) auszugeben, um den Transmitter (280) gemäß der Feststellung zu konfigurieren; wobei der Empfänger (200) ferner derart konfiguriert ist, um eine MIMO-Kanalantwortmatrix zum Entschlüsseln eines empfangen Signals und zum Errechnen einer Kanalmetrik zu schätzen und um einen Abbau der Kanalantwortmatrix zum Errechnen einer Kanalmetrik und/oder zum Entschlüsseln eines empfangenen Signals parallel zur Kanalantwortschätzung festzustellen.

17. Adaptives MIMO-Kommunikationssystem nach einem der Ansprüche 1 bis 15, wobei der MIMO-Einpfänger (200) ferner ein Kanalmetrik-Errechnungsmodul (238) mit einer Kanalmetrikausgabe und einem Entscheidungsmodul (210) enthält, wobei das Entscheidungsmodul (210) eine Kanalmetrikeingabe und eine Ausgabe zum Senden eines MIMO-Konfigurationssignals an den MIMO-Transmitter (280) aufweist, wobei das Entscheidungsmodul (210) derart konfiguriert ist, um eine MIMO-Übertragunsskonfiguration festzustellen, die auf die Kanalmetrikeingabe anspricht und um ein MIMO-Konfigurationssignal zum Feedback an den Transmitter (280) auszugeben, um den Transmitter (280) gemäß der Feststellung zu konfigurieren; wobei der Empfänger (200) ferner derart konfiguriert ist, um eine MIMO-Kanalantwortmatrix zum Entschlüsseln eines empfangenen Signals und zum Errechnen einer Kanalmetrik zu schätzen und um einen Abbau der Kanalantwortmatrix zum Errechnen einer Kanalmetrik und zum Entschlüsseln eines empfangenen Signals festzustellen, das geteilte Berechnungsressourcen einsetzt.

18. MIMO-Empfänger (200) eines adaptiven MIMO-Kommunikationssystems, wobei das MIMO-Kommunikationssystem ferner einen MIMO-Transmitter (280) umfasst und einen Feedback-Weg (212) vom Empfänger zum Transmitter aufweist, wobei der MIMO-Transmitter (280) einen Empfänger (282) enthält, um ein Feedback-Signal vom Empfänger zu empfangen, das über den Feedback-Weg gesendet worden ist und ein Steuergerät, das auf das Feedback-Signal anspricht, um eine MIMO-Übertragung vom Transmitter zum Empfänger zu konfigurierten;
wobei der MIMO-Empfänger (200) derart konfiguriert ist, um die MIMO-Übertragung zu empfangen; und
wobei der MIMO-Empfänger (200) ein Entscheidungsmodul (210) enthält und wobei der Empfänger durch das Entscheidungsmodul (210) charakterisiert ist, mit einer eine Leistung anzeigenden Eingabe zum Eingeben eines Signals, das einen erwünschten Empfängerleistungsverbrauch anzeigt und einer Ausgabe zum Senden eines MIMO-Konfigurationssignals an den MIMO-Transmitter (280), wobei das Entscheidungsmodul (210) derart konfiguriert ist, um eine MIMO-Übertragungskonfiguration festzustellen, die auf die die Leistung anzeigende Eingabe anspricht und um ein MIMO-Konfigurationssignal zum Feedback an den Transmitter (280) auszugeben.

19. MIMO-Empfänger (200) nach Anspruch 18, wobei der Empfänger Folgendes umfasst:
einen MIMO-Kanalmatrix-Schätzer, um eine MIMO-Kanalantwortmatrix zum Entschlüsseln eines empfangenen Signals zu schätzen; und
ein Matrixabbaumodul, um einen Abbau der Kanalantwortmatrix zum Entschlüsseln eines empfangenen Signals festzustellen; und
wobei der Empfänger derart konfiguriert ist, um die Kanalantwort parallel zur Kanalmatrixantwort-Abbaufeststellung zu schätzen.

20. Verfahren des Konfigurierens eines adaptiven MIMO-Kommunikationssystems, umfassend einen MIMO-Transmitter (280) und einen MIMO-Empfänger (200) und mit einem Feedback-Weg (212) vom Empfänger (200) zum Transmitter (280), wobei der MIMO-Transmitter (280) einen Empfänger (282) enthält, um ein Feedback-Signal vom Empfänger (200) zu empfangen, das über den Feedback-Weg (212) gesendet worden ist und ein Steuergerät, das auf das Feedback-Signal anspricht, um eine MIMO-Übertragung vom Transmitter (280) zum Empfänger (200) zu konfigurierten, wobei der MIMO-Empfänger (200) derart konfiguriert ist, um die MIMO-Übertragung zu empfangen, wobei das Verfahren durch Folgendes charakterisiert ist, umfassend:
die Eingabe eines Signals, das einen erwünschten Empfängerleistungsverbrauch anzeigt;
das Feststellen einer MIMO-Übertragungskonfiguration, die auf die Leistungsanzeigeeingabe anspricht; und
die Ausgabe eines MIMO-Konfigurationssignals zum Feedback an den Transmitter, um den Transmitter (280) gemäß der Feststellung zu konfigurierten.

21. Verfahren nach Anspruch 20, wobei das Verfahren ferner Folgendes umfasst:
die Eingabe eines erwünschten Kommunikationsdienstgütensignals (QoS);
das Feststellen einer zweiten MIMO-Übertragungskonfiguration, die auf das erwünschte QoS-Signal anspricht;
die Ausgabe des zweiten MIMO-Konfigurationssignals zum Feedback an den Transmitter, um den Transmitter gemäß der Feststellung zu konfigurieren;
das Messen einer Kommunikationsdienstgüte (QoS);
die Feststellung einer dritten MIMO-Übertragungskonfiguration, die auf die gemessene QoS anspricht; und
die Ausgabe eines dritten MIMO-Konfigurationssignals zum Feedback an den Transmitter (280), um den Transmitter gemäß der zweiten Feststellung zu konfigurieren.

22. Trägermedium, das einen computerlesbaren Code zur Steuerung eines Mikroprozessors trägt, um das Verfahren nach einem der Ansprüche 20 und 21 auszuführen.

## Revendications

1. Système de communication MIMO adaptif comprenant un émetteur MIMO (280) et un récepteur MIMO (200), et présentant un chemin de rétroaction (212) allant dudit récepteur audit émetteur ;
ledit émetteur MIMO (280) comprenant un récepteur (282) pour recevoir un signal de rétroaction provenant dudit récepteur, envoyé par le biais dudit chemin de rétroaction, et un contrôleur répondant audit signal de rétroaction en vue de configurer une transmission MIMO dudit émetteur vers ledit récepteur ;
ledit récepteur MIMO (200) étant configuré de manière à recevoir ladite transmission MIMO, dans lequel ledit récepteur MIMO (200) comprend un module de décision (210), et dans lequel ledit système est **caractérisé en ce que** ledit module de décision (210) présente une entrée d'indication de puissance destinée à entrer un signal indiquant une consommation électrique souhaitée côté récepteur, et une sortie pour envoyer un signal de configuration MIMO audit émetteur MIMO (280), ledit module de décision (210) étant configuré de manière à déterminer une configuration de transmission MIMO en réponse à ladite entrée d'indication de puissance, et à générer en sortie un signal de configuration MIMO en vue d'une rétroaction vers ledit émetteur (280), afin de configurer ledit émetteur (280) selon ladite détermination.

2. Système MIMO adaptif selon la revendication 1, dans lequel ledit récepteur (200) inclut en outre un système de mesure de qualité de service (QoS) de communication présentant une sortie de signal de qualité QoS mesurée, et dans lequel ledit module de décision inclut une entrée de qualité QoS mesurée en provenance de ladite sortie de qualité QoS mesurée, et une entrée de qualité QoS souhaitée pour entrer un signal indiquant une qualité QoS souhaitée, et dans lequel ledit module de décision est en outre configuré de manière à recevoir un dit signal de qualité QoS souhaitée, à déterminer une première configuration de transmission MIMO en réponse audit signal de qualité QoS souhaitée, à générer en sortie un premier signal de configuration MIMO en vue d'une rétroaction vers ledit émetteur (280) afin de configurer ledit émetteur en fonction de ladite détermination, à entrer ledit signal de qualité QoS mesurée, à déterminer une seconde configuration de transmission MIMO en réponse audit signal de qualité QoS mesurée, et à générer en sortie un deuxième signal de configuration MIMO en vue d'une rétroaction vers ledit émetteur (280) afin de configurer ledit émetteur (280) selon ladite seconde détermination.

3. Système MIMO adaptif selon la revendication 2, dans lequel ledit signal de qualité QoS souhaitée comprend un signal indiquant de quelle catégorie, parmi une pluralité de catégories, relèvent les données à transmettre.

4. Système MIMO adaptif selon la revendication 3, dans lequel ladite pluralité de catégories de données définit une pluralité de niveaux minimaux de qualité QoS acceptables.

5. Système MIMO adaptif selon la revendication 3 ou 4, dans lequel ladite pluralité de catégories de données définit une pluralité de latences maximales de transmission de données.

6. Système MIMO adaptif selon l'une quelconque des revendications 2 à 5, dans lequel ledit signal de qualité QoS mesurée comprend un signal de taux d'erreurs sur les blocs.

7. Système MIMO adaptif selon l'une quelconque des revendications 2 à 6, dans lequel ledit émetteur comprend un module de compression de données, répondant audit signal de rétroaction, pour générer en sortie des données audio et/ou vidéo compressées à transmettre, dans lequel ledit module de décision est configuré de manière à générer en sortie un signal de configuration MIMO indiquant qu'un débit de données réduit doit être utilisé lorsque ladite qualité QoS mesurée est inférieure à ladite qualité QoS souhaitée, et dans lequel ledit émetteur est configuré de manière à commander ledit module de compression de données en réponse audit signal de réduction de débit afin de fournir une sortie à débit de données réduit.

8. Système MIMO adaptif selon l'une quelconque des revendications précédentes, dans lequel ledit module de décision est en outre configuré de manière à déterminer une dite configuration de transmission MIMO en réponse à une configuration de transmission MIMO déterminée précédemment.

9. Système MIMO adaptif selon l'une quelconque des revendications précédentes, dans lequel ledit récepteur comprend en outre un module de calcul de mesure de canal présentant une sortie de mesure de canal, et dans lequel ledit module de décision est en outre configuré de manière à déterminer une dite configuration de transmission MIMO en réponse à ladite sortie de mesure de canal.

10. Système MIMO adaptif selon la revendication 9, dans lequel ledit module de calcul de mesure de canal présente une entrée de détermination de temps, dans lequel ladite mesure de canal est calculée sur une période de temps en réponse à ladite entrée de détermination de temps, et dans lequel ledit module de décision est configuré de manière à fournir un signal de type de canal à ladite entrée de détermination de temps, ledit signal de type de canal indiquant une catégorie, parmi une pluralité de catégories de type de canal, de laquelle relève un canal MIMO entre ledit émetteur MIMO et ledit récepteur MIMO.

11. Système MIMO adaptif selon la revendication 9 ou 10, dans lequel ledit récepteur est en outre configuré de manière à estimer une matrice de réponse de canal MIMO en vue de décoder un signal reçu et de calculer une dite mesure de canal.

12. Système MIMO adaptif selon la revendication 11, dans lequel ledit récepteur est configuré de manière à déterminer une décomposition de ladite matrice de réponse de canal, en vue de calculer une dite mesure de canal et/ou de décoder un signal reçu, en parallèle à ladite estimation de réponse de canal.

13. Système MIMO adaptif selon la revendication 11, dans lequel ledit récepteur est configuré de manière à déterminer une décomposition de ladite matrice de réponse de canal, en vue de calculer une dite mesure de canal et de décoder un signal reçu en utilisant des ressources de calcul informatique partagées.

14. Système MIMO adaptif selon l'une quelconque des revendications précédentes, dans lequel ledit signal de configuration MIMO comprend un signal indiquant un schéma ou un algorithme de transmission MIMO et/ou une taille de constellation ou un type de modulation,

15. Système MIMO adaptif selon l'une quelconque des revendications 2 à 14, dans lequel ledit module de décision comprend une table de consultation pour fournir des données indiquant une configuration MIMO préférée et un module de modification de décision pour modifier ladite configuration MIMO préférée en réponse audit signal de qualité QoS mesurée, en vue de fournir une configuration MIMO modifiée à générer en sortie en tant que ledit signal de configuration MIMO.

16. Système de communication MIMO adaptif selon l'une quelconque des revendications précédentes, dans lequel ledit récepteur MIMO (200) comprend en outre un module de calcul de mesure de canal (238) présentant une sortie de mesure de canal et un module de décision (210), ledit module de décision (210) présentant une entrée de mesure de canal et une sortie pour envoyer un signal de configuration MIMO audit émetteur MIMO (280), ledit module de décision (210) étant configuré de manière à déterminer une configuration de transmission MIMO en réponse à ladite entrée de mesure de canal et à générer en sortie un signal de configuration MIMO en vue d'une rétroaction vers ledit émetteur (280) afin de configurer ledit émetteur (280) selon ladite détermination ; dans lequel ledit récepteur (200) est en outre configuré de manière à estimer une matrice de réponse de canal MIMO pour décoder un signal reçu et pour calculer une dite mesure de canal, et à déterminer une décomposition de ladite matrice de réponse de canal, pour calculer une dite mesure de canal et/ou décoder un signal reçu, en parallèle à ladite estimation de réponse de canal.

17. Système de communication MIMO adaptif selon l'une quelconque des revendications 1 à 15, dans lequel ledit récepteur MIMO (200) comprend en outre un module de calcul de mesure de canal (23 8) présentant une sortie de mesure de canal et un module de décision (210), ledit module de décision (210) ayant une entrée de mesure de canal et une sortie pour envoyer un signal de configuration MIMO audit émetteur MIMO (280), ledit module de décision (210) étant configuré de manière à déterminer une configuration de transmission MIMO en réponse à ladite entrée de mesure de canal, et à générer en sortie un signal de configuration MIMO en vue d'une rétroaction vers ledit émetteur (280) afin de configurer ledit émetteur (280) selon ladite détermination ; dans lequel ledit récepteur (200) est en outre configuré de matière à estimer une matrice de réponse de canal MIMO afin de décoder un signal reçu et de calculer une dite mesure de canal, et à déterminer une décomposition de ladite matrice de réponse de canal, pour calculer une dite mesure de canal et pour décoder un signal reçu en utilisant des ressources de calcul informatique partagées.

18. Récepteur MIMO (200) d'un système de communication MIMO adaptif, le système de communication MIMO comprenant en outre un émetteur MIMO (280) et présentant un chemin de rétroaction (212) allant dudit récepteur audit émetteur, ledit émetteur MIMO (280) incluant un récepteur (282) pour recevoir un signal de rétroaction en provenance dudit récepteur, envoyé par le biais dudit chemin de rétroaction, et un contrôleur répondant audit signal de rétroaction pour configurer une transmission MIMO dudit émetteur audit récepteur ;
dans lequel le récepteur MIMO (200) est configuré de manière à recevoir ladite transmission MIMO ; et
dans lequel ledit récepteur MIMO (200) inclut un module de décision (210), et dans lequel le récepteur est **caractérisé en ce que** ledit module de décision (210) présente une entrée d'indication de puissance destinée à entrer un signal indiquant une consommation électrique souhaitée côté récepteur, et une sortie pour envoyer un signal de configuration MIMO audit émetteur MIMO (280), ledit module de décision (210) étant configuré de manière à déterminer une configuration de transmission MIMO en réponse à ladite entrée d'indication de puissance, et à générer en sortie un signal de configuration MIMO en vue d'une rétroaction vers ledit émetteur (280).

19. Récepteur MIMO (200) selon la revendication 18, le récepteur comprenant :
un module d'estimation de canal MIMO pour estimer une matrice de réponse de canal MIMO en vue de décoder un signal reçu ; et
un module de décomposition de matrice pour déterminer une décomposition de ladite matrice de réponse de canal en vue de décoder un signal reçu ; et
dans lequel ledit récepteur est configuré de manière à estimer ladite réponse de canal en parallèle à ladite détermination de décomposition de réponse de matrice de canal.

20. Procédé de configuration d'un système de communications MIMO adaptif comprenant un émetteur MIMO (280) et un récepteur MIMO (200) et présentant un chemin de rétroaction (212) allant dudit récepteur (200) audit émetteur (280), ledit émetteur MIMO (280) incluant un récepteur (282) destiné à recevoir un signal de rétroaction provenant dudit récepteur (200), envoyé par l'intermédiaire dudit chemin de rétroaction (212), et un contrôleur répondant audit signal de rétroaction afin de configurer une transmission MIMO dudit émetteur (280) audit récepteur (200), ledit récepteur MIMO (200) étant configuré de manière à recevoir ladite transmission MIMO, le procédé étant **caractérisé en ce qu'**il comprend :
l'entrée d'un signal indiquant une consommation électrique souhaitée côté récepteur ;
la détermination d'une configuration de transmission MIMO en réponse à ladite entrée d'indication de puissance ; et
la génération en sortie d'un signal de configuration MIMO en vue d'une rétroaction vers ledit émetteur afin de configurer ledit émetteur (280) selon ladite détermination.

21. Procédé selon la revendication 20, le procédé comprenant en outre :
l'entrée d'un signal de qualité de service de communication souhaitée (QoS) ;
la détermination d'une seconde configuration de transmission MIMO en réponse audit signal de qualité QoS souhaitée ;
la génération en sortie dudit deuxième signal de configuration MIMO en vue d'une rétroaction vers ledit émetteur afin de configurer ledit émetteur selon ladite détermination ;
la mesure d'une qualité de service de communication (QoS) ;
la détermination d'une troisième configuration de transmission MIMO en réponse à ladite qualité QoS mesurée ; et
la génération en sortie d'un troisième signal de configuration MIMO en vue d'une rétroaction vers ledit émetteur (280) afin de configurer ledit émetteur selon ladite seconde détermination.

22. Support transportant un code lisible par ordinateur pour commander à un microprocesseur de mettre en oeuvre le procédé selon l'une quelconque des revendications 20 et 21.
